# EUROPEAN PATENT APPLICATION

(11) **EP 1 671 544 A1**
(43) Date of publication of application: **21.06.2006**
(21) Application number: 05015925.0
(22) Date of filing: 22.07.2005
(51) Int. Cl.: A01N 65/00

(54) **Liquid moth-repelling compositions made from precious wood essences**

(30) Priority: 13.12.2004 CH 20582004
(71) Applicant: De Leuriks B.V., 1015 BV Amsterdam (NL)
(72) Inventor: Schmidig de Vecchi, Monna, 6948 Porza (CH)
(74) Representative: La Ciura, Salvatore

(57) **Abstract**

This invention proposes a compound in a liquid state, characterised by the fact to be made up only of fragrant essences, in particular essences of precious woods, the whole of which has also a powerful moth-repelling effect.

The compound, which is advantageously made in a liquid form in such a way as to soak a paper support or the like.

## Description

This invention proposes a compound in a liquid state, characterised by the fact to be made up only of fragrant essences, in particular essences of precious woods, the whole of which has also a powerful moth-repelling effect.

The compound, which is advantageously made in a liquid form in such a way as to soak a paper support or the like, comprises the following substances, the percentages of which, in thousandths, are expressed as weight:

| | |
|---|---|
| Vertofix (Methyl Cedryl Ketone) | 354 |
| Orange Terpenes | 40 |
| Clove Bud Essential Oil | 2 |
| Linalyl Acetate | 50 |
| Linalool | 42 |
| Dihydro Myrcenol | 60 |
| Patchouli Essential Oil | 10 |
| Lavandin Essential Oil | 50 |
| Reconstituted Bergamot | 50 |
| Gurjum Essential Oil | 80 |
| Dehydrated Guaiacwood Essential Oil | 40 |
| Basil Essential Oil | 2 |
| Armoise Essential Oil | 5 |
| Cedarwood Essential Oil | 205 |
| Peppermint Essential Oil | 3 |
| Nutmeg Essential Oil | 6 |
| Galbanum Essential Oil (10%) | 1 |

This is a natural ingredient-based and pesticide-free compound, the effects of which last a longer time and which, besides giving off a pleasant scent, turned out to be able to produce a powerful moth-repelling effect.

The compound according to this invention falls into the sector of products having moth-repelling effect, i.e. those products which give off, for a certain span of time, vapours which keep the moths away, as they have a strong repellent effect to these insects.

The known moth-repelling compounds give off vapours which can be, as the case may be, released by evaporation or by sublimation of the substances forming the compound which, in its turn, can be of natural or synthetic origin.

As far as the synthetic products are concerned, the vapours the said products release have usually a toxic effect on the moths, which generally die when they are immersed into an atmosphere saturated by the said vapours, as it happens for example inside a wardrobe.

On the other hand, the said vapours produce their toxic effects, even though to a very much lesser extent, on the persons who inhale the vapours and who, in case of particularly sensitive subjects, can develop allergies.

Natural compounds, such as citronella, lavender or clove bud essential oil, are also known and can be used either singularly or mixed together.

The said compounds are not very popular, as they have rather weak and not lasting effects, hence the need to use the product at high concentrations or to replace it often, thus making this product not profitable.

This invention falls into this sector by proposing a compound made of natural ingredients, having moth-repelling effect, which compound, even if pleasantly perfumed, results to be repellent to the moths.

The compound according to this invention, as specified above, is simply made up of fragrant substances, in particular natural substances and in particular essences of precious woods.

By the use of the said ingredients, the inventor has developed a compound which offers much more effective effects than those showed by the known products, which guarantees a pleasant deodorising effect and acts as a powerful moth-repellent.

The compound according to this invention has the following composition, in which the parts are expressed as weight:

| | |
|---|---|
| Vertofix | 100 to 500 parts per thousand; |
| Orange Terpenes | 10 to 100 parts per thousand; |
| Clove Bud Essential Oil | 1 to 10 parts per thousand; |
| Linalyl Acetate | 10 to 100 parts per thousand; |
| Linalool | 10 to 100 parts per thousand |
| Dihydro Myrcenol | 10 to 100 parts per thousand; |
| Patchouli Essential Oil | 1 to 10 parts per thousand; |
| Lavandin Essential Oil | 10 to 100 parts per thousand; |
| Reconstituted Bergamot | 10 to 100 parts per thousand; |
| Gurjum Essential Oil | 10 to 100 parts per thousand; |
| Dehydrated Guaiacwood | |
| Essential Oil | 10 to 100 parts per thousand; |
| Basil Essential Oil | 1 to 10 parts per thousand; |
| Armoise Essential Oil | 1 to 10 parts per thousand; |
| Cedarwood Essential Oil | 100 to 500 parts per thousand; |
| Peppermint Essential Oil | 1 to 10 parts per thousand; |
| Nutmeg Essential Oil | 1 to 10 parts per thousand; |
| Galbanum Essential Oil (10%) | 1 to 10 parts per thousand. |

Among the many substances tested by the applicant, the one which gave the optimal results is the following:

| | |
|---|---|
| Vertofix | 354 parts per thousand; |
| Orange Terpenes | 40 parts per thousand; |
| Clove Bud Essential Oil | 2 parts per thousand; |
| Linalyl Acetate | 50 parts per thousand; |
| Linalool | 42 parts per thousand |
| Dihydro Myrcenol | 60 parts per thousand; |
| Patchouli Essential Oil | 10 parts per thousand; |
| Lavandin Essential Oil | 50 parts per thousand; |
| Reconstituted Bergamot | 50 parts per thousand; |
| Gurjum Essential Oil | 80 parts per thousand; |
| Dehydrated Guaiacwood | |
| Essential Oil | 40 parts per thousand; |
| Basil Essential Oil | 2 parts per thousand; |
| Armoise Essential Oil | 5 parts per thousand; |
| Cedarwood Essential Oil | 205 parts per thousand; |
| Peppermint Essential Oil | 3 parts per thousand; |
| Nutmeg Essential Oil | 6 parts per thousand; |
| Galbanum Essential Oil (10%) | 1 part per thousand. |

As mechanical support for the compound, which is produced in a liquid state, according to a preferred embodiment of the invention, blotting paper soaked in the said compound shall be used.

In addition to the said support, also different kinds of supports may be used, provided that these have a proper porosity and a good workability, in order to obtain the most suitable shapes for the single specific applications.

The various substances used in the compound have been indicated with the trade name by which they are known by the manufacturer and also by the persons skilled in the art.

A skilled in the art may make changes and different versions which must be considered included within the competence of this invention.

## Claims

1. Air deodorising compound in the liquid state, having a moth-repelling effect, **characterised by** the fact to be made up of natural fragrant essences.

2. Moth-repelling compound according to claim 1, **characterised by** the fact to be made up of precious wood essences.

3. Moth-repelling compound according to claim 1, **characterised by** the fact to provide for the following composition, in which the parts are expressed as weight:
| | |
|---|---|
| Vertofix | 100 to 500 parts per thousand; |
| Orange Terpenes | 10 to 100 parts per thousand; |
| Clove Bud Essential Oil | 1 to 10 parts per thousand; |
| Linalyl Acetate | 10 to 100 parts per thousand; |
| Linalool | 10 to 100 parts per thousand |
| Dihydro Myrcenol | 10 to 100 parts per thousand; |
| Patchouli Essential Oil | 1 to 10 parts per thousand; |
| Lavandin Essential Oil | 10 to 100 parts per thousand; |
| Reconstituted Bergamot | 10 to 100 parts per thousand; |
| Gurjum Essential Oil | 10 to 100 parts per thousand; |
| Dehydrated Guaiacwood | |
| Essential Oil | 10 to 100 parts per thousand; |
| Basil Essential Oil | 1 to 10 parts per thousand; |
| Armoise Essential Oil | 1 to 10 parts per thousand; |
| Cedarwood Essential Oil | 100 to 500 parts per thousand; |
| Peppermint Essential Oil | 1 to 10 parts per thousand; |
| Nutmeg Essential Oil | 1 to 10 parts per thousand; |
| Galbanum Essential Oil (10%) | 1 to 10 parts per thousand. |

4. Moth-repelling compound according to claim 3, **characterised by** the fact to have the following formula:
| | |
|---|---|
| Vertofix (Methyl Cedryl Ketone) | 354 parts per thousand |
| Orange Terpenes | 40 parts per thousand |
| Clove Bud Essential Oil | 2 parts per thousand |
| Linalyl Acetate | 50 parts per thousand |
| Linalool | 42 parts per thousand |
| Dihydro Myrcenol | 60 parts per thousand |
| Patchouli Essential Oil | 10 parts per thousand |
| Lavandin Essential Oil | 50 parts per thousand |
| Reconstituted Bergamot | 50 parts per thousand |
| Gurjum Essential Oil | 80 parts per thousand |
| Dehydrated Guaiacwood Essential Oil | 40 parts per thousand |
| Basil Essential Oil | 2 parts per thousand |
| Armoise Essential Oil | 5 parts per thousand |
| Cedarwood Essential Oil | 205 parts per thousand |
| Peppermint Essential Oil | 3 parts per thousand |
| Nutmeg Essential Oil | 6 parts per thousand |
| Galbanum Essential Oil at 10% | 1 parts per thousand |

5. Strips with moth-repelling effect obtained by soaking a porous support with the composition according to claims 1 to 4.

6. Strips with moth-repelling effect according to claim 5, in which the said porous support is made up of blotting paper.
